# EUROPEAN PATENT SPECIFICATION

(11) **EP 3 622 302 B1**
(45) Date of publication and mention of the grant of the patent: **08.10.2025**
(21) Application number: 18723896.9
(22) Date of filing: 26.04.2018
(51) Int. Cl.: G01N 35/04

(54) **RECEPTACLE TERMINAL**
BUCHSENKLEMME
TERMINAL DE TYPE RÉCEPTACLE

(30) Priority: 12.05.2017 FI 20175432
(43) Date of publication of application: 18.03.2020
(73) Proprietor: Thermo Fisher Scientific Oy, 01620 Vantaa (FI)
(72) Inventor: PAAVILAINEN, Sami, 01620 Vantaa (FI)
(74) Representative: Laine IP Oy
(86) International application number: PCT/FI2018/050307
(87) International publication number: WO 2018/206842

(56) References cited:
- EP-A1- 2 889 626
- EP-A2- 2 237 019
- US-A1- 2007 110 617

## Description

### FIELD

The present invention relates to a receptacle terminal. Further, the present invention relates to a method of providing a receptacle. Furthermore, the present invention relates to a computer program product. Additionally, the present invention relates to a computer-readable data carrier.

### BACKGROUND

A wide variety of automated laboratory systems are known in the art and widely used in hospitals, clinics, and research laboratories. A laboratory automation system typically comprises a number of stations, in which samples, for example blood, saliva, swap, and other target substances are processed. The device complex may comprise a plurality of separate devices such as a sample analyzer, a conveyor system, a receptacle terminal, and a sample storage, for instance. In automated systems handling receptacles with target substances contained in a sample, typically so called sample tubes, test tubes, cuvettes, sample containers, sample vessels, or other sample receptacles, particularly elongate receptacles, are used for temporarily storing the target substance. The sample tubes, test tubes, cuvettes or other sample receptacles, in the following only referred to as "receptacles", can be e.g. placed in so called sample receptacle holders. Each receptacle holder can support one receptacle upright. A plurality of sample receptacles may be supported by a so called rack, carrier, magazine, test tube rack, sample tube rack, tube tray, sample tube keeper, sample tube carrier, or the like. In the following said device is only referred to as "receptacle rack".

In an automated laboratory system or a part thereof, there is a desire to have manually access to at least one specific sample receptacle supported by a specific receptacle holder or a specific receptacle rack. Thus, a specific receptacle can be manipulated, for instance. Additionally, a specific receptacle may be manually inserted into the automated laboratory system or removed from the system.

For example, document US 8691149 B2 discloses a system for automatically loading an immunoassay analyzer. A front panel of a magnetic particle processor comprises a rotatable upper portion, which has a closed position and an open position. The rotatable upper portion is attached to a top panel or cover by a first hinge and a second hinge. The rotatable upper portion also has a handle to enable a user to manually open and close the rotatable upper portion. The rotatable upper portion has an aperture formed at the center of an edge of the rotatable upper portion. The aperture must be of sufficient size to enable a supporting rail to pass through it. The supporting rail supports a supporting tray, which is capable of supporting at least one micro-well plate. The supporting rail is fixed at the distal end thereof and is free at the proximal end thereof. The supporting rail is sufficiently rigid and sufficiently strong to support both the supporting tray and the equipment, that are required to move the supporting tray into and out of the magnetic particle processor. The supporting rail allows the micro-well plate(s) to be manipulated at some distance apart from the interior of the magnetic particle processor. The supporting rail must be of a sufficient length to enable the supporting tray to be extended a sufficient distance to be clear of a front panel. The supporting tray is capable of being driven along the supporting rail away from the magnetic particle processor and towards the magnetic particle processor. A stepper motor, an encoder, a drive gear, a threaded lead screw, and a threaded nut can be used to control the motion of the supporting tray for the micro-well plate(s). The system is designed to enable the automatic insertion and removal of reaction vessels into and out of a magnetic particle processor. Document EP 2237019 A2 further describes a blood analyser comprising a blood sample supply section, a sample preparation section, a light source, an optical detecting section as well as a controller. Furthermore, document EP 2889626 A1 teaches a sample processing apparatus comprising a rack for holding sample tubes. Additionally, document US 2007/110617 A1 discloses a sample analyser comprising a sample container receiver, a container holder receiver, a sample container supplier, an aspirator as well as an analysing part.

In view of the foregoing, it would be beneficial to provide a receptacle terminal, e.g. for an automated laboratory system or a part thereof, which receptacle terminal is capable of providing a user manual access to at least one specific sample receptacle. The receptacle terminal should be capable of being manufactured in industrial scale.

### SUMMARY OF THE INVENTION

The invention is defined by the features of the independent claims. Some specific embodiments are defined in the dependent claims.

According to a first aspect of the present invention, there is provided a receptacle terminal comprising a housing, a movable platform, said movable platform comprising slots for receptacle racks, and a first transporting unit which is configured to move the movable platform along a linear guide, wherein the first transporting unit is configured to transport at least a first receptacle rack arranged on the movable platform,, within the housing from a first position to a second position, wherein the first position comprises a robot access area, and wherein the second position comprises a user access area, a second transporting unit, wherein the first receptacle rack is at the first position only accessible by the second transporting unit, and wherein the first receptacle rack is at the second position within the housing and only manually accessible by a user through a first opening in the housing, wherein the receptacle terminal comprises a third transporting unit configured to transport at least one receptacle rack to or from a slot of the movable platform.

Various embodiments of the first aspect may comprise at least one feature from the following bulleted list:
- the first transporting unit is configured to linearly guide the first receptacle rack from the first position to the second position
- the third transporting unit comprises at least one of a conveyor and a lifter
- the first transporting unit is configured to linearly guide the first receptacle rack from the second position to the first position
- at least one receptacle holder is arranged on the platform or an integral part of the platform
- the first transporting unit is further configured to transport the at least one receptacle holder together with the first receptacle rack within the housing from the first position to the second position
- the second transporting unit is capable of transporting a receptacle in at least two dimensions
- the second transporting unit is a mechanical gripper
- the first transport unit and the second transporting unit are capable of transporting a receptacle to at least one of a disposal port, another system of a device complex, a receptacle storage, a receptacle rack, the first receptacle rack, a receptacle holder, a user access area, or a robot access area
- the third transporting unit is configured to transport at least one receptacle rack to or from a slot of the platform through a second opening in the housing
- the third transporting unit is configured to feed the receptacle terminal with a series of receptacle racks
- the third transporting unit is configured to remove a series of receptacle racks from the receptacle terminal
- the housing includes a hatch which is configured cover the first opening
- the second transporting unit is capable of operating as the first receptacle rack is positioned at the second position
- the second transporting unit is configured to interrupt operation as the first receptacle rack is positioned at the second position

According to a second aspect of the present invention, there is provided a method comprising selecting a specific receptacle, removing the receptacle from a second receptacle rack and inserting the receptacle into a first receptacle rack by a second transporting unit, transporting a movable platform comprising slots for receptacle racks, wherein the first receptacle rack is arranged on the movable platform, within a housing of a receptacle terminal along a linear guide from a first position, wherein the first receptacle rack is only accessible by the second transporting unit at the first position, to a second position by a first transporting unit, wherein the first receptacle rack is at the second position within the housing and only manually accessible by a user through a first opening in the housing, wherein the first position comprises a robot access area, and wherein the second position comprises a user access area, and transporting a receptacle rack to or from a slot of the movable platform by a third transporting unit, wherein the third transporting unit is configured to feed the receptacle terminal with a receptacle rack by the third transporting unit or remove a receptacle rack from the receptacle terminal by the third transporting unit.

According to another embodiment, the method yet further comprises transporting a receptacle rack to or from a slot of the movable platform through a second opening in the housing by the third transporting unit.

According to a third aspect of the present invention, there is provided a computer program product comprising instructions which, when the program is executed on a receptacle terminal according to any one of claims 1 - 10, cause the computer to carry out the steps of the method according to claim 11.

According to a fourth aspect of the present invention, there is provided a computer-readable data carrier having stored thereon the computer program product of claim 13.

Considerable advantages are obtained by certain embodiments of the invention. A receptacle terminal and a method of providing a receptacle are provided according to certain embodiments of the present invention. The receptacle terminal, e.g. for an automated laboratory system or a part thereof, is capable of providing a user manual access to at least one specific sample receptacle. The specific sample receptacle, for example a sample tube, may be delivered to a user access area by a first transporting unit upon request by a user. Of course, the receptacle terminal is also capable of receiving a receptacle, which has been manually inserted by a user, and transferring it to a receptacle rack. Thus, a user can request a specific receptacle to be delivered and re-insert the receptacle at a later stage, for instance. The delivery and re-insertion of the receptacle can take place quickly, because the receptacle is transported along a relatively short distance by the first transporting unit via a linear guide.

Further, the user access area is located within the housing of the receptacle terminal. Thus, a user cannot collide with parts of the receptacle terminal protruding from the housing of the receptacle terminal, for example with a supporting rail supporting a supporting tray or a drawer. In other words, safety of a user and simultaneously also safety of receptacles contained in the receptacle terminal and safety of the receptacle terminal can be improved.

Furthermore, a user cannot come physically into contact with a robot handling the receptacles due to providing at least one specific receptacle from a robot access area to a separate user access area, thus further improving safety. According to certain embodiments, the second transporting unit may be capable of operating as the first receptacle rack is positioned at the second position, i.e. the user access area.

Additionally, positioning of receptacle racks and therefore also of the receptacles can be performed very precisely on the movable platform. The platform can be further moved very precisely by means of the first transporting unit. Consequently, tolerances required for handling receptacles with the second transporting unit, for example a mechanical gripper, can be easily fulfilled.

According to certain embodiments, the receptacle terminal can be connected to a sample storage. Receptacle racks can be fed into the receptacle terminal through a second opening in the housing by means of a third transporting unit. Of course, receptacle racks can also be removed from the receptacle terminal and be fed into the sample storage.

Further, receptacles may be disregarded by transporting the receptacles with the second transporting unit to a disposal port. Additionally, the receptacle terminal may be connected to a device complex. Receptacles contained in the receptacle terminal can then be delivered by the second transporting unit to other systems of the device complex comprising the receptacle terminal.

### BRIEF DESCRIPTION OF THE DRAWINGS

FIGURE 1 illustrates a schematic perspective view of a receptacle terminal in accordance with at least some embodiments of the present invention,
FIGURE 2 illustrates a schematic top view of a receptacle terminal in accordance with at least some embodiments of the present invention,
FIGURE 3 illustrates a schematic top view of a platform and a second transporting unit of a receptacle terminal in accordance with at least some embodiments of the present invention,
FIGURE 4 illustrates a schematic top view of a platform and a second transporting unit of another receptacle terminal in accordance with at least some embodiments of the present invention,
FIGURE 5 illustrates a schematic top view of a first receptacle rack and a plurality of receptacle holders, which are arranged on a platform, as well as a second transporting unit of a receptacle terminal in accordance with at least some embodiments of the present invention,
FIGURE 6 illustrates a schematic perspective view of a platform and a second transporting unit of a receptacle terminal in accordance with at least some embodiments of the present invention,
FIGURE 7 illustrates a schematic perspective view of a first transporting unit and a second transporting unit of a receptacle terminal in accordance with at least some embodiments of the present invention,
FIGURE 8 illustrates a schematic front view of a first transporting unit and a second transporting unit of a receptacle terminal in accordance with FIGURE 7,
FIGURE 9 illustrates a schematic top view of a first transporting unit and a second transporting unit of a receptacle terminal in accordance with FIGURE 7 and FIGURE 8,
FIGURE 10 illustrates a schematic perspective view of a third transporting unit of a receptacle terminal in accordance with at least some embodiments of the present invention, and
FIGURE 11 illustrates a method for providing a receptacle in accordance with at least some embodiments of the present invention.

### EMBODIMENTS

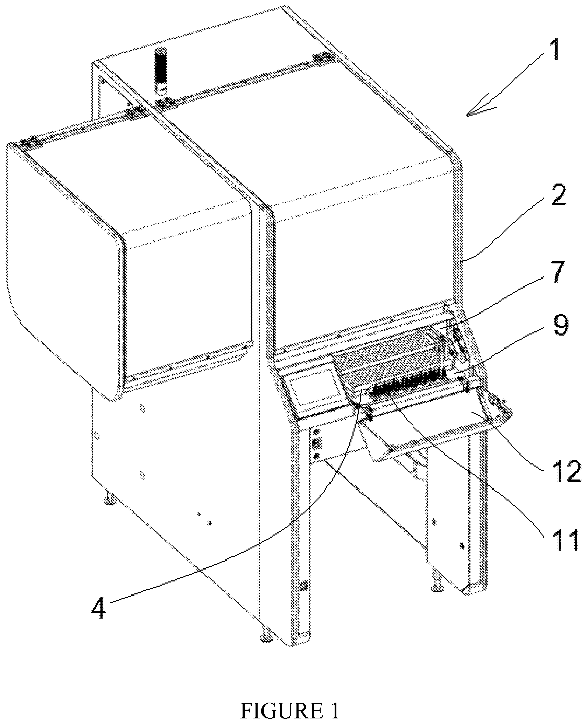

In FIGURE 1 a schematic perspective view of a receptacle terminal 1 in accordance with at least some embodiments of the present invention is illustrated. The receptacle terminal 1 comprises a housing 2 and a first transporting unit (not shown) which is configured to transport a first receptacle rack 4, which is arranged on a platform 9 or a support, within the housing 2 from a first position (not shown) to a second position 6. In the shown embodiment, the first receptacle rack 4 is at the second position 6 within the housing 2 and manually accessible by a user through a first opening 7 in the housing 2. The housing includes an opened hatch 12 which is configured cover the first opening 7.

Therefore, a user cannot collide with parts of the receptacle terminal protruding from the housing of the receptacle terminal. Safety of a user and simultaneously also safety of receptacles contained in the receptacle terminal and safety of the receptacle terminal can be thus improved.

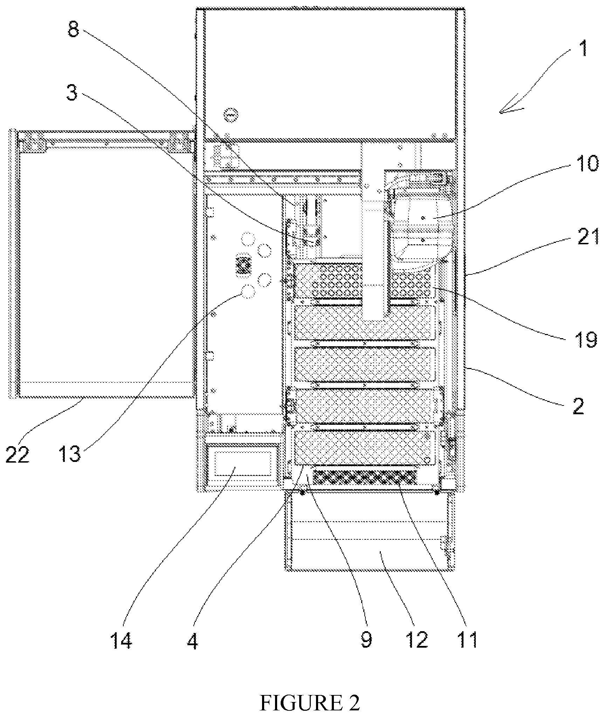

In FIGURE 2 a schematic top view of a receptacle terminal 1 in accordance with at least some embodiments of the present invention is illustrated. A part of the housing 2 covering the inside of the receptacle terminal 1 has been removed. The receptacle terminal 1 comprises a housing 2 and a first transporting unit 3 which is configured to transport a first receptacle rack 4, which is arranged on a platform 9, within the housing 2 from a first position to a second position.

As shown in FIGURE 2, the first receptacle rack 4, which is located closest to the hatch 12, is manually accessible by a user through a first opening (not shown) in the housing 2. The first receptacle rack 4 is in its second position only accessible by the user and not by a second transporting device 10. According to the shown embodiment, only the first receptacle rack 4 is accessible by the user in its second position. On the other side, the receptacle rack being farthest away from the hatch 12, i.e. a second receptacle rack 19, is only accessible by the second transporting unit 10 and not by the user.

In the shown embodiment, handling of receptacles supported by the second receptacle rack 19 being farthest away from the hatch 12 can be performed by the second transporting unit 10, even if the first receptacle rack 4 being located closest to the hatch 12 is only accessible by the user. In other words, the receptacle terminal 1 provides a user access area and a robot access area. A user can have manually access to the first receptacle rack 4 and simultaneously the second transporting unit 10 can handle receptacles supported by the second receptacle rack 19 according to the shown embodiment. According to other embodiments, the second transporting unit 10 is configured to interrupt operation as the first receptacle rack 4 is positioned at the second position 6.

The first transporting unit 3 is configured to linearly guide at least a first receptacle rack 4 from the first position, in which the first receptacle rack 4 is located in the robot access area, to the second position, in which the first receptacle rack 4 is located in the user access area. Of course, the first transporting unit 3 is also configured to linearly guide at least the first receptacle rack 4 from the second position to the first position, i.e. in an opposite direction. Typically, the first transporting unit 3 is configured to move the platform 9 along a linear guide 8, and thus also the first receptacle rack 4 supported by the movable platform 9.

The second transporting unit 10 may be, for example, a handling robot such as a mechanical gripper which is capable of moving a receptacle in two or three dimensions. A user cannot come physically into contact with the second transporting unit 10 handling the receptacles within the housing 2. The second transporting unit 10 may be configured to remove a single receptacle, e.g. a sample tube, test tube, cuvette, sample container, sample vessel, or other sample receptacle, particularly an elongate receptacle, from the second receptacle rack 19 positioned in the robot access area and to subsequently transport the respective receptacle to a disposal port 13 comprising at least one disposal hole, for instance. The second transporting unit 10 may be also configured to, for example, remove a respective receptacle from one receptacle rack and to subsequently insert the receptacle into another receptacle rack. The other receptacle rack may be provided in the robot access area by moving the platform 9 along the linear guide 8 by means of the first transporting unit 3. Further, the second transporting unit 10 may also be, for example, configured to remove a receptacle from a receptacle rack and to transport the respective receptacle to another system of a device complex (not shown) via a delivery port 22. The other system of the device complex may be, for example a conveyor system, which is configured to transport a series of further receptacle holders or further receptacle racks.

Furthermore, the receptacle terminal 1 can optionally comprise a third transporting unit (not shown) which is configured to transport at least one receptacle rack or a series of receptacle racks to or from respective slots of the platform 9 through a further second opening 21 in the housing 2, for example to or from a receptacle storage (not shown). The second opening functions as an inlet/outlet. The platform 9 according to the shown embodiment comprises five slots for receptacle racks in total. Thus, it is possible to feed the receptacle terminal 1 with receptacle racks as well as to remove receptacle racks from the receptacle terminal 1 through the second opening 21 by means of the third transporting unit.

The first transporting unit 3 is further configured to transport a plurality of receptacle holders 11 within the housing 2 from the first position 5, i.e. the user access area, to the second position 6, in which the first receptacle rack is located in the robot access area. The receptacle holders 11 are at the second position 6 manually accessible by the user through the first opening in the housing 2. When the receptacle holders 11 have been transported by the first transporting unit 3 to their first position, receptacles can be removed from the respective receptacle holders 11 and inserted into the receptacle holders 11 by the second transporting unit 10. The receptacle holders 11 may be an integral part of the platform 9 or arranged on the platform 9.

The housing 2 of the receptacle terminal 1 further includes a hatch 12 which is configured cover the first opening, and thus also the user access area. Contamination of the receptacle terminal 1 as well as of the receptacles contained in the receptacle terminal can be reduced due to the hatch 12.

Additionally, the receptacle terminal 1 according to certain embodiments comprises a computing device 14. It is e.g. possible to cause the second transporting device (10) to select a specific receptacle, which is located in one of the receptacle racks, and to insert the respective receptacle into the first receptacle rack 4 being located closest to the hatch 12 or into one of the receptacle holders 11 and to subsequently cause the first transporting unit 3 to transport the receptacle to the second position, i.e. to the user access area, by instructing the computing device 14. Thus, the user can select a specific receptacle to be delivered to the user access area of the receptacle terminal 1. The user may then manually manipulate the respective receptacle, for instance. Of course, the user may also insert a specific receptacle into one of the receptacle holders 11 or into the first receptacle rack 4 being located closest to the hatch 12 and instruct the computing device 14 to cause the first transporting unit 3 and the second transporting unit 10 to transport the respective receptacle to any one of the receptacle racks. In other words, by means of the receptacle terminal 1 it is possible to feed an automated device complex comprising the receptacle terminal 1 with a receptacle or to remove a receptacle from the automated device complex, for instance.

Additionally, the computing device 14 may be instructed by the user to cause transporting of a receptacle to the disposal section 13. For example, a receptacle may be manually inserted into one of the receptacle holders 11 or into the receptacle rack 4 being located closest to the hatch 12 and then transported by the first transporting unit 3 to the first position, i.e. the robot access area. Then, the second transporting unit 10 can remove the respective receptacle from the receptacle holder 11 or the first receptacle rack 4, transport the receptacle to the disposal port 13, and drop the receptacle into one of the disposal holes of the disposal port 13. Subsequently, the receptacle is guided to a disposal container (not shown).

Each receptacle may be provided with a barcode. The receptacle terminal 1 may further comprise a barcode reader (not shown) connected to the computing device 14. A specific receptacle can thus be identified and may be transported by means of the first transporting device 3 and the second transporting device 10, for example to a disposal port 13, another system of a device complex, a receptacle storage, the first receptacle rack, another receptacle rack, the user access area, or the robot access area.

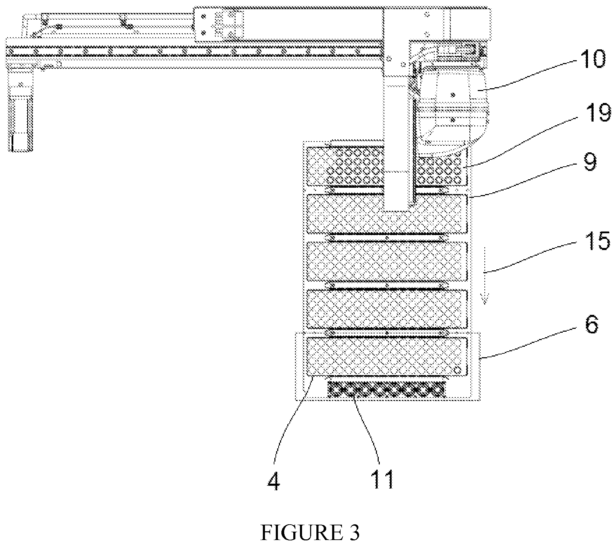

In FIGURE 3 a schematic top view of a platform 9 and a second transporting unit 10 of a receptacle terminal in accordance with at least some embodiments of the present invention is illustrated. In the shown embodiment, a first receptacle rack 4, which is arranged on a platform 9, has been transported by the first transporting unit (not shown) from a first position to the second position 6 in a first direction 15 as indicated by the arrow. The first receptacle rack 4 as well as the receptacle holders 11 are manually accessible by a user. Receptacles supported by a second receptacle rack 19, which is located in the robot access area, are only accessible by the second transporting unit 10. Receptacles located between the first receptacle rack 4 and the second receptacle rack 19 are neither accessible by the user nor the second transporting unit 10.

According to certain embodiments, the second transporting unit 10 is capable of handling receptacles located in the robot access area as the first receptacle rack 4 is located at the first position 6. According to certain other embodiments, interruption of handling of receptacles located in the robot access area by the second transporting unit 10 takes place as the first receptacle rack 4 is located at the first position 6.

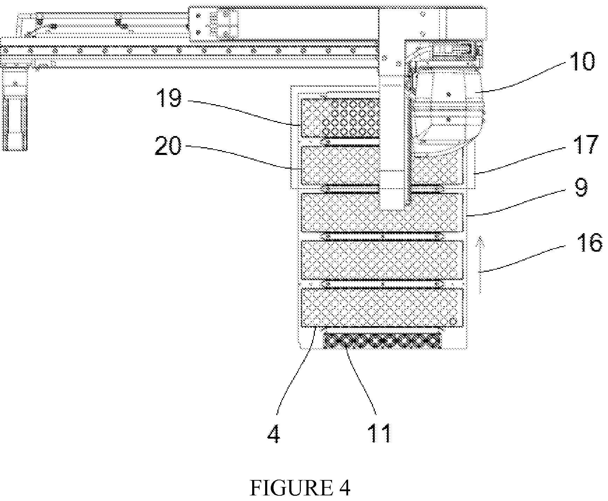

In FIGURE 4 a schematic top view of a platform 9 and a second transporting unit 10 of another receptacle terminal in accordance with at least some embodiments of the present invention is illustrated. In the shown embodiment, a first receptacle rack 4, which is arranged on a platform 9, has been transported by the first transporting unit (not shown) from a second position, i.e. the user access area, to another position, which is not the first position, in a second direction 16 as indicated by the arrow. The first receptacle rack 4 as well as the receptacle holders 11 are neither manually accessible by a user nor by the second transporting unit 10.

Receptacles supported by a second receptacle rack 19 and receptacles supported by a third receptacle rack 20 are located in the robot access area 17 and thus accessible by the second transporting unit 10. Typically, at least two receptacle racks can be located in the robot access area 17. The first receptacle rack 4 has to be transported by the first transporting unit to the robot access area 17 in order to have access to the first receptacle rack 4 or one of the receptacle holders 11 by means of the second transporting unit 10. Also the receptacle racks arranged between the third receptacle rack 20 and the first receptacle rack 4 are neither manually accessible by a user nor by the second transporting unit 10.

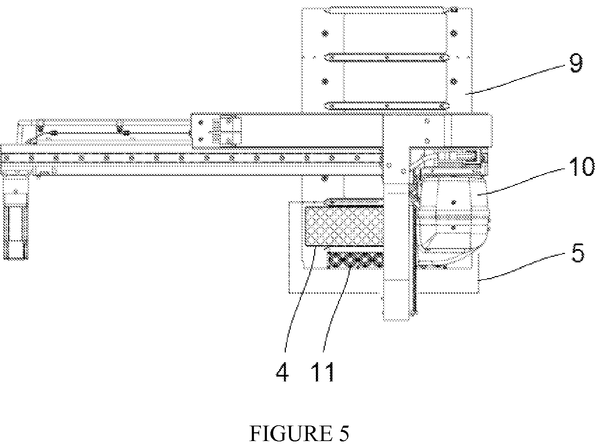

In FIGURE 5 a schematic top view of a first receptacle rack 4 and a plurality of receptacle holders 11, which are arranged on a platform 9, as well as a second transporting unit 10 of a receptacle terminal in accordance with at least some embodiments of the present invention is illustrated. In the shown embodiment, a first receptacle rack 4, which is arranged on a platform 9, has been transported by the first transporting unit (not shown) from a second position to a first position 5, wherein the first receptacle rack 4 is located in the robot access area.

The first receptacle rack 4 as well as the receptacle holders 11 are not manually accessible by a user. The first receptacle rack 4 as well as the receptacle holders 11 are accessible by a second transporting unit 10. In other words, the first receptacle rack 4 has been transported to the first position 5, i.e. to the robot access area. The second transporting unit 10 is capable of operating as the at least one receptacle rack 4 is positioned at the second position 6. For example, a receptacle supported by the first receptacle rack 4 or one of the receptacle holders 11 may be removed from the first receptacle rack 4 by the second transporting unit 10 and then transported to a disposal port (not shown).

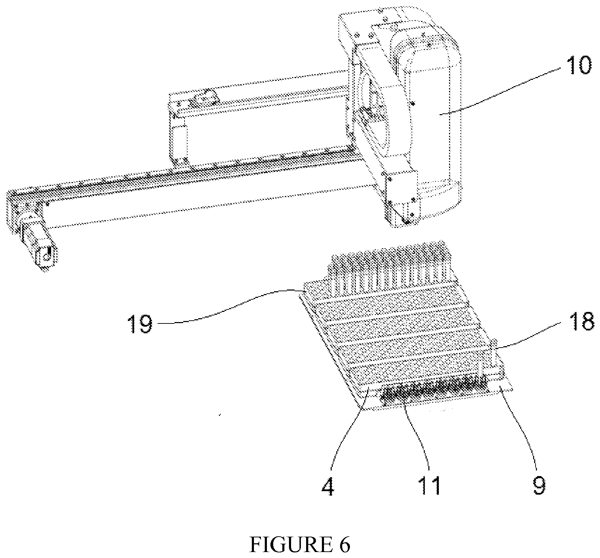

In FIGURE 6 a schematic perspective view of a platform 9 and a second transporting unit 10 of a receptacle terminal in accordance with at least some embodiments of the present invention is illustrated. The second receptacle rack 19 is almost completely loaded with receptacles. Further, a single receptacle 18 is inserted into the first receptacle rack 4 and a single receptacle is inserted into one of the receptacle holders 11. A user can have access to the receptacles 18 supported by the first receptacle rack 4 and the receptacle holder 11 in order to e.g. inspect the respective receptacles 18 as the platform has been moved by the first transporting unit (not shown) such that the first receptacle rack is provided at the first position.

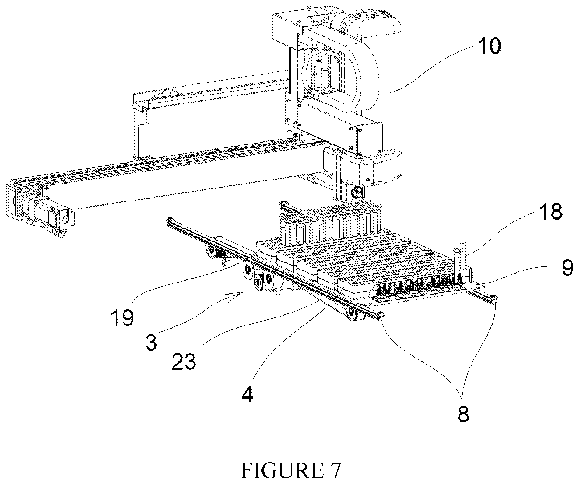

In FIGURE 7 a schematic perspective view of a first transporting unit 3 and a second transporting unit 10 of a receptacle terminal in accordance with at least some embodiments of the present invention is illustrated. The first transporting unit 3 comprises two linear guides 8 and at least one belt 23. The belt 23 is configured to be driven along a closed trajectory. Therefore, the first transporting unit 3 comprises a plurality of wheels. One wheel is positioned at one end of the closed trajectory and the other wheel is positioned at the other end of the closed trajectory. Further, the first transporting unit 3 comprises at least one further driving wheel, which is configured to cause the belt 23 to move along the closed trajectory. The motion of the belt 23 can be reversed by means of the driving wheel in order to move the belt 23 in another direction of the closed trajectory. The driving wheel is connected to a servo motor.

Additionally, the platform 9 is coupled to the belt 23. Thus, it is possible to move the platform 9 and at least a first receptacle rack 4, which is arranged on the movable platform 9, along the linear guides 8 from a first position, in which the first receptacle rack 4 is accessible by a second transporting unit 10, to a second position, in which the first receptacle rack 4 is accessible by a user. Of course, it is also possible to move the platform 9 and at least the first receptacle rack 4 along the linear guides 8 from the second position to the first position. Consequently, it is possible to deliver at least one specific receptacle 18 from a robot access area to a user access area and in the opposite direction.

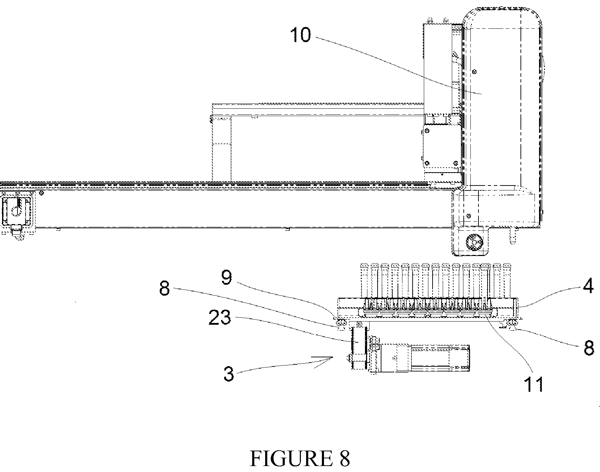

In FIGURE 8 a schematic front view of a first transporting unit 3 and a second transporting unit 10 of a receptacle terminal in accordance with FIGURE 7 is illustrated.

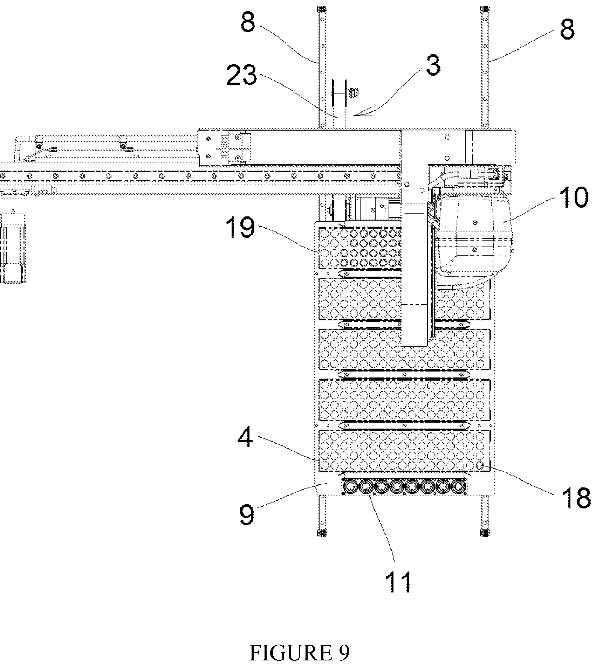

In FIGURE 9 a schematic top view of a first transporting unit and a second transporting unit of a receptacle terminal in accordance with FIGURE 7 and FIGURE 8 is illustrated.

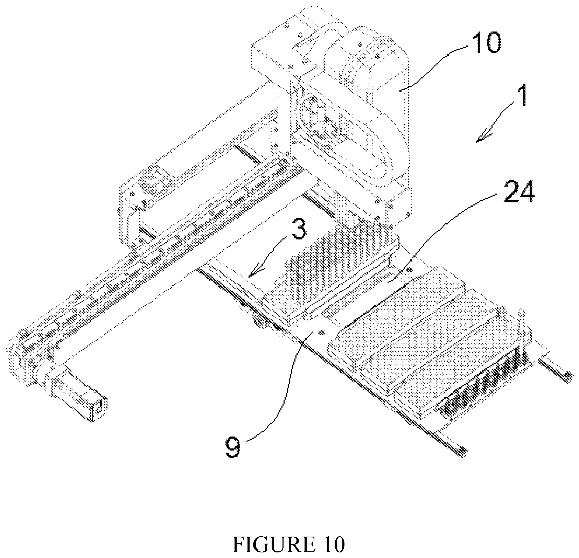

In FIGURE 10 a schematic perspective view of a third transporting unit 24 of a receptacle terminal 1 in accordance with at least some embodiments of the present invention is illustrated. The third transporting unit 24 comprises a lifter and a conveyor belt. The third transporting unit 24 is configured to transport at least one receptacle rack to or from a slot of the platform 9. For example, the third transporting unit 24 may move through an opening in the platform 9 and lift a rack upwards, i.e. perpendicular to the platform 9, while a conveyor of the third transporting unit 24 moves the rack sideways, i.e. perpendicular to the direction of movement of the lifter. Thus, a receptacle rack can be removed from the platform. The receptacle rack may be, for example, transferred through an opening 21 in the housing 2 of the receptacle terminal 1 as shown in FIGURE 2, for example to a receptacle rack storage (not shown). At least one receptacle rack slot may comprise the opening in the platform 9. Of course, the receptacle rack can also be received, for example from the receptacle rack storage. In such a case, the receptacle rack arriving through the opening 21 in the housing 2 is positioned above the platform 9 using the conveyor of the third transporting unit 24 and subsequently arranged on the platform 9 by moving the lifter of the third transporting unit 24 downwards. In other words, the third transporting unit 24 is configured to feed the receptacle terminal 1 with a series of receptacle racks and/or to remove a series of receptacle racks from the receptacle terminal 1.

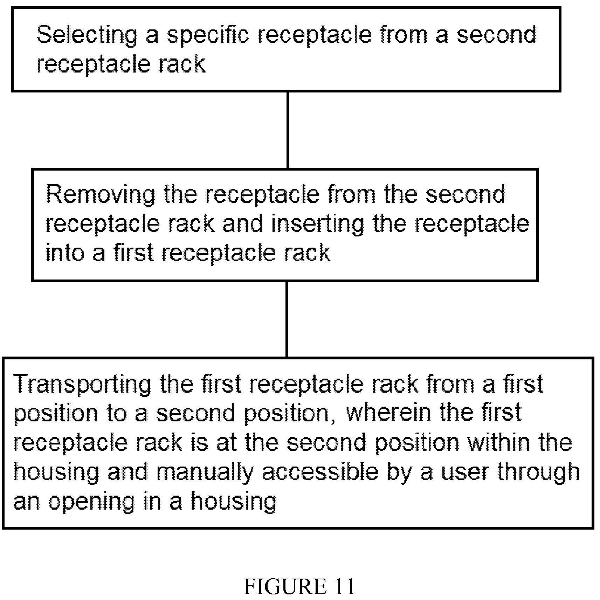

In FIGURE 11 a method for providing a receptacle in accordance with at least some embodiments of the present invention is illustrated. The method comprises selecting a specific receptacle 18 from a second receptacle rack 19, for example by means of a computing device 14, removing the receptacle 18 from the second receptacle rack 19 and inserting the receptacle into a first receptacle rack 4 by means of a second transporting unit 10. The method further comprises transporting the first receptacle rack 4, which is arranged on a movable platform 9, within a housing 2 of a receptacle terminal 1 from a first position 5, wherein the first receptacle rack 4 is accessible by the second transporting unit 10, to a second position 6 by means of a first transporting unit 3, wherein the first receptacle rack 4 is at the second position 6 within the housing 2 and manually accessible by a user through a first opening 7 in a housing 2. Thus, a selected receptacle 18 can be delivered to a user access area of the receptacle terminal 1.

Instead of inserting the receptacle into the first receptacle rack 4, the receptacle may also be inserted into a receptacle holder 11 by means of the second transporting unit 10. The method then further comprises transporting the receptacle holder 11, which is arranged on a movable platform 9, within a housing 2 of a receptacle terminal 1 from a first position 5, wherein the receptacle holder 11 is accessible by the second transporting unit 10, to a second position 6 by means of a first transporting unit 3, wherein the receptacle holder 11 is at the second position 6 within the housing 2 and manually accessible by a user through a first opening 7 in a housing 2.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting. The scope of the invention is defined by the appended claims.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in automated laboratory systems.

### REFERENCE SIGNS LIST

- 1: receptacle terminal
- 2: housing
- 3: first transporting unit
- 4: first receptacle rack
- 5: first position
- 6: second position
- 7: first opening
- 8: linear guide
- 9: platform
- 10: second transporting unit
- 11: receptacle holder
- 12: hatch
- 13: disposal port
- 14: computing device
- 15: first direction
- 16: second direction
- 17: robot access area
- 18: receptacle
- 19: second receptacle rack
- 20: third receptacle rack
- 21: second opening
- 22: delivery port
- 23: belt
- 24: third transporting unit

### CITATION LIST

Patent Literature
US 8691149 B2

## Claims

1. A receptacle terminal (1) comprising:
- a housing (2),
- a movable platform (9), said movable platform comprising slots for receptacle racks,
- a first transporting unit (3) which is configured to move the movable platform (9) along a linear guide, wherein the first transporting unit (3) is configured to transport at least a first receptacle rack (4) arranged on the movable platform (9), within the housing (2) from a first position (5) to a second position (6), wherein the first position comprises a robot access area, and wherein the second position comprises a user access area,
- a second transporting unit (10), wherein the first receptacle rack (4) is at the first position (5) only accessible by the second transporting unit (10),
- and wherein the first receptacle rack (4) is at the second position (6) within the housing (2) and only manually accessible by a user through a first opening (7) in the housing (2),
- wherein the receptacle terminal (1) comprises a third transporting unit (24) configured to transport at least one receptacle rack to or from a slot of the movable platform (9).

2. The receptacle terminal (1) according to claim 1, wherein the first transporting unit (3) is configured to linearly guide the first receptacle rack (4) from the first position (5) to the second position (6) and/or the first transporting unit (3) is configured to linearly guide the first receptacle rack (4) from the second position (6) to the first position (5).

3. The receptacle terminal (1) according to claim 1, wherein the third transporting unit (24) comprises at least one of a conveyor and a lifter.

4. The receptacle terminal (1) according to any one of claims 1-3, wherein the third transporting unit (24) is configured to feed the receptacle terminal (1) with a series of receptacle racks.

5. The receptacle terminal (1) according to any one of claims 1-4, wherein the third transporting unit (24) is configured to remove a series of receptacle racks from the receptacle terminal (1).

6. The receptacle terminal (1) according to any one of claims 1-5, wherein the third transporting unit (24) is configured to transport at least one receptacle rack to or from a slot of the platform (9) through a second opening (21) in the housing (2).

7. The receptacle terminal (1) according to any one of claims 1-6, wherein the housing (2) includes a hatch (12) which is configured cover the first opening (7).

8. The receptacle terminal (1) according to any one of claims 1-7, wherein at least one receptacle holder (11) is arranged on the platform (9) or an integral part of the platform (9).

9. The receptacle terminal (1) according to claim 8, wherein the first transporting unit (3) is further configured to transport the at least one receptacle holder (11) together with the first receptacle rack (4) within the housing (2) from the first position (5) to the second position.

10. The receptacle terminal (1) according to claim 9, wherein the at least one receptacle holder (11) is at the second position (6) manually accessible by the user through the first opening (7) in the housing (2).

11. A method comprising:
- selecting a specific receptacle (18),
- removing the receptacle (18) from a second receptacle rack (19) and inserting the receptacle into a first receptacle rack (4) by a second transporting unit (10),
- transporting a movable platform (9) comprising slots for receptacle racks, wherein the first receptacle rack (4) is arranged on the movable platform (9), within a housing (2) of a receptacle terminal (1) along a linear guide from a first position (5), wherein the first receptacle rack (4) is only accessible by the second transporting unit (10) at the first position (5), to a second position (6) by a first transporting unit (3), wherein the first receptacle rack (4) is at the second position (6) within the housing (2) and only manually accessible by a user through a first opening (7) in the housing (2), wherein the first position (5) comprises a robot access area, and wherein the second position (6) comprises a user access area, and
- transporting a receptacle rack to or from a slot of the movable platform (9) by a third transporting unit (24), wherein the third transporting unit (24) is configured to feed the receptacle terminal (1) with a receptacle rack by the third transporting unit (24) or remove a receptacle rack from the receptacle terminal (1) by the third transporting unit (24).

12. The method according to claim 11, the method yet further comprising transporting a receptacle rack to or from a slot of the movable platform (9) through a second opening (21) in the housing (2) by the third transporting unit (24).

13. A computer program product comprising instructions which, when the program is executed by a computer, when the computer is connected to or comprised by the receptacle terminal according to any one of claims 1-10, cause the computer to carry out the steps of the method according to claim 11.

14. A computer-readable data carrier having stored thereon the computer program product of claim 13.

## Patentansprüche

1. Gefäß-Terminal (1), umfassend:
- ein Gehäuse (2),
- eine bewegliche Plattform (9), wobei die bewegliche Plattform Schlitze für Gefäßgestelle aufweist,
- eine erste Transporteinheit (3), die konfiguriert ist, um die bewegliche Plattform (9) entlang einer Linearführung zu bewegen, wobei die erste Transporteinheit (3) konfiguriert ist, um mindestens ein auf der beweglichen Plattform (9) angeordnetes erstes Gefäßgestell (4) innerhalb des Gehäuses (2) von einer ersten Position (5) zu einer zweiten Position (6) zu transportieren, wobei die erste Position einen Roboterzugangsbereich umfasst und wobei die zweite Position einen Benutzerzugangsbereich umfasst,
- eine zweite Transporteinheit (10), wobei sich das erste Gefäßgestell (4) an der ersten Position (5) befindet und nur durch die zweite Transporteinheit (10) zugänglich ist,
- und wobei sich das erste Gefäßgestell (4) an der zweiten Position (6) innerhalb des Gehäuses (2) befindet und für einen Benutzer nur manuell durch eine erste Öffnung (7) im Gehäuse (2) zugänglich ist,
- wobei das Gefäß-Terminal (1) eine dritte Transporteinheit (24) umfasst, die konfiguriert ist, um mindestens ein Gefäßgestell zu oder von einem Schlitz der beweglichen Plattform (9) zu transportieren.

2. Gefäß-Terminal (1) nach Anspruch 1, wobei die erste Transporteinheit (3) konfiguriert ist, um das erste Gefäßgestell (4) linear von der ersten Position (5) zur zweiten Position (6) zu führen und/oder die erste Transporteinheit (3) konfiguriert ist, um das erste Gefäßgestell (4) linear von der zweiten Position (6) zur ersten Position (5) zu führen.

3. Gefäß-Terminal (1) nach Anspruch 1, wobei die dritte Transporteinheit (24) mindestens ein Förderband und einen Heber umfasst.

4. Gefäß-Terminal (1) nach einem der Ansprüche 1-3, wobei die dritte Transporteinheit (24) konfiguriert ist, um dem Gefäß-Terminal (1) eine Reihe von Gefäßgestellen zuzuführen.

5. Gefäß-Terminal (1) nach einem der Ansprüche 1-4, wobei die dritte Transporteinheit (24) konfiguriert ist, um eine Reihe von Gefäßgestellen aus dem Gefäß-Terminal (1) zu entfernen.

6. Gefäß-Terminal (1) nach einem der Ansprüche 1-5, wobei die dritte Transporteinheit (24) konfiguriert ist, um mindestens ein Gefäßgestell durch eine zweite Öffnung (21) im Gehäuse (2) zu einem Schlitz der Plattform (9) oder von diesem weg zu transportieren.

7. Gefäß-Terminal (1) nach einem der Ansprüche 1-6, wobei das Gehäuse (2) eine Klappe (12) einschließt, die konfiguriert ist, um die erste Öffnung (7) abzudecken.

8. Gefäß-Terminal (1) nach einem der Ansprüche 1-7, wobei mindestens ein Gefäßhalter (11) auf der Plattform (9) angeordnet oder integraler Bestandteil der Plattform (9) ist.

9. Gefäß-Terminal (1) nach Anspruch 8, wobei die erste Transporteinheit (3) ferner konfiguriert ist, um den mindestens einen Gefäßhalter (11) zusammen mit dem ersten Gefäßgestell (4) innerhalb des Gehäuses (2) von der ersten Position (5) zur zweiten Position zu transportieren.

10. Gefäß-Terminal (1) nach Anspruch 9, wobei sich der mindestens eine Gefäßhalter (11) an der zweiten Position (6) befindet und für den Benutzer manuell durch die erste Öffnung (7) im Gehäuse (2) zugänglich ist.

11. Verfahren, umfassend:
- Auswählen eines bestimmten Gefäßes (18),
- Entnehmen des Gefäßes (18) aus einem zweiten Gefäßgestell (19) und Einsetzen des Gefäßes in ein erstes Gefäßgestell (4) durch eine zweite Transporteinheit (10),
- Transportieren einer beweglichen Plattform (9) umfassend Schlitze für Gefäßgestelle, wobei das erste Gefäßgestell (4) auf der beweglichen Plattform (9) angeordnet ist, innerhalb eines Gehäuses (2) eines Gefäß-Terminals (1) entlang einer linearen Führung von einer ersten Position (5), wobei das erste Gefäßgestell (4) an der ersten Position (5) nur durch die zweite Transporteinheit (10) zugänglich ist, zu einer zweiten Position (6) durch eine erste Transporteinheit (3), wobei sich das erste Gefäßgestell (4) an der zweiten Position (6) innerhalb des Gehäuses (2) befindet und nur manuell durch einen Benutzer durch eine erste Öffnung (7) im Gehäuse (2) zugänglich ist, wobei die erste Position (5) einen Roboterzugangsbereich umfasst, und wobei die zweite Position (6) einen Benutzerzugangsbereich umfasst, und
- Transportieren eines Gefäßgestells zu oder von einem Schlitz der beweglichen Plattform (9) durch eine dritte Transporteinheit (24), wobei die dritte Transporteinheit (24) konfiguriert ist, um dem Gefäß-Terminal (1) ein Gefäßgestell durch die dritte Transporteinheit (24) zuzuführen oder ein Gefäßgestell durch die dritte Transporteinheit (24) aus dem Gefäß-Terminal (1) zu entfernen.

12. Verfahren nach Anspruch 11, wobei das Verfahren ferner das Transportieren eines Gefäßgestells zu oder von einem Schlitz der beweglichen Plattform (9) durch eine zweite Öffnung (21) im Gehäuse (2) durch die dritte Transporteinheit (24) umfasst.

13. Computerprogrammprodukt, das Anweisungen umfasst, die, wenn das Programm von einem Computer ausgeführt wird, wenn der Computer mit dem Gefäß-Terminal gemäß einem der Ansprüche 1-10 verbunden ist oder von diesem umfasst wird, den Computer veranlassen, die Schritte des Verfahrens gemäß Anspruch 11 auszuführen.

14. Computerlesbarer Datenträger, auf dem das Computerprogramm von Anspruch 13 gespeichert ist.

## Revendications

1. Terminal à réceptacle (1) comprenant :
- un boîtier (2),
- une plate-forme mobile (9), ladite plate-forme mobile comprenant des fentes pour les portoirs de réceptacle,
- une première unité de transport (3) qui est conçue pour déplacer la plate-forme mobile (9) le long d'un guide linéaire, dans lequel la première unité de transport (3) est conçue pour transporter au moins un premier portoir de réceptacle (4) disposé sur la plate-forme mobile (9), à l'intérieur du boîtier (2), d'une première position (5) à une seconde position (6), dans lequel la première position comprend une zone d'accès au robot, et dans lequel la seconde position comprend une zone d'accès à l'utilisateur,
- une deuxième unité de transport (10), dans lequel le premier portoir de réceptacle (4) est, dans la première position (5), uniquement accessible par la deuxième unité de transport (10),
- et dans lequel le premier portoir de réceptacle (4) est dans la seconde position (6) à l'intérieur du boîtier (2) et n'est accessible manuellement par un utilisateur que par une première ouverture (7) dans le boîtier (2),
- dans lequel le terminal à réceptacle (1) comprend une troisième unité de transport (24) conçue pour transporter au moins un portoir de réceptacle vers ou depuis une fente de la plate-forme mobile (9).

2. Terminal à réceptacle (1) selon la revendication 1, dans lequel la première unité de transport (3) est conçue pour guider linéairement le premier portoir de réceptacle (4) de la première position (5) à la seconde position (6) et/ou la première unité de transport (3) est conçue pour guider linéairement le premier portoir de réceptacle (4) de la seconde position (6) à la première position (5).

3. Terminal à réceptacle (1) selon la revendication 1, dans lequel la troisième unité de transport (24) comprend au moins l'un parmi un convoyeur et un élévateur.

4. Terminal à réceptacle (1) selon l'une quelconque des revendications 1 à 3, dans lequel la troisième unité de transport (24) est conçue pour fournir au terminal à réceptacle (1) une série de portoirs de réceptacle.

5. Terminal à réceptacle (1) selon l'une quelconque des revendications 1 à 4, dans lequel la troisième unité de transport (24) est conçue pour retirer une série de portoirs de réceptacle du terminal à réceptacle (1).

6. Terminal à réceptacle (1) selon l'une quelconque des revendications 1 à 5, dans lequel la troisième unité de transport (24) est conçue pour transporter au moins un portoir de réceptacle vers ou depuis une fente de la plate-forme (9) à travers une seconde ouverture (21) dans le boîtier (2).

7. Terminal à réceptacle (1) selon l'une quelconque des revendications 1 à 6, dans lequel le boîtier (2) comporte une trappe (12) qui est conçue pour couvrir la première ouverture (7).

8. Terminal à réceptacle (1) selon l'une quelconque des revendications 1 à 7, dans lequel au moins un porte-réceptacle (11) est disposé sur la plate-forme (9) ou fait partie intégrante de la plate-forme (9).

9. Terminal à réceptacle (1) selon la revendication 8, dans lequel la première unité de transport (3) est en outre conçue pour transporter l'au moins un porte-réceptacle (11) avec le premier portoir de réceptacle (4) à l'intérieur du boîtier (2) de la première position (5) à la seconde position.

10. Terminal à réceptacle (1) selon la revendication 9, dans lequel l'au moins un porte-réceptacle (11) est dans la seconde position (6) accessible manuellement par l'utilisateur à travers la première ouverture (7) dans le boîtier (2).

11. Procédé comprenant :
- la sélection d'un réceptacle spécifique (18),
- le retrait du réceptacle (18) d'un second portoir de réceptacle (19) et l'insertion du réceptacle dans un premier portoir de réceptacle (4) par une deuxième unité de transport (10),
- le transport d'une plate-forme mobile (9) comprenant des fentes pour des portoirs de réceptacle, dans lequel le premier portoir de réceptacle (4) est disposé sur la plate-forme mobile (9), à l'intérieur d'un boîtier (2) d'un terminal à réceptacle (1) le long d'un guide linéaire depuis une première position (5), dans lequel le premier portoir de réceptacle (4) n'est accessible par la deuxième unité de transport (10) qu'à partir de la première position (5), vers une seconde position (6) par une première unité de transport (3), dans lequel le premier portoir de réceptacle (4) est dans la seconde position (6) à l'intérieur du boîtier (2) et n'est accessible manuellement par un utilisateur que par une première ouverture (7) dans le boîtier (2), dans lequel la première position (5) comprend une zone d'accès au robot, et dans lequel la seconde position (6) comprend une zone d'accès à l'utilisateur, et
- le transport d'un portoir de réceptacle vers ou depuis une fente de la plate-forme mobile (9) par une troisième unité de transport (24), dans lequel la troisième unité de transport (24) est conçue pour fournir au terminal à réceptacle (1) un portoir de réceptacle par la troisième unité de transport (24) ou pour retirer un portoir de réceptacle du terminal à réceptacle (1) par la troisième unité de transport (24).

12. Procédé selon la revendication 11, le procédé comprenant en outre le transport d'un portoir de réceptacle vers ou depuis une fente de la plate-forme mobile (9) à travers une seconde ouverture (21) dans le boîtier (2) par la troisième unité de transport (24).

13. Produit-programme informatique comprenant des instructions qui, lorsque le programme est exécuté par un ordinateur, lorsque l'ordinateur est connecté au terminal à réceptacle selon l'une quelconque des revendications 1 à 10 ou qu'il est compris par celui-ci, amènent l'ordinateur à exécuter les étapes du procédé selon la revendication 11.

14. Support de données lisible par ordinateur sur lequel est stocké le produit-programme informatique selon la revendication 13.
